Europäisches Patentamt

European Patent Office

Office européen des brevets

(11) Publication number: **0 263 516 B1**

## EUROPEAN PATENT SPECIFICATION

(45) Date of publication of patent specification: **22.04.92**   (51) Int. Cl.⁵: **C08F 4/64**, C08F 10/00

(21) Application number: **87114690.8**

(22) Date of filing: **08.10.87**

(54) **A solid catalyst component for olefin polymerization catalysts.**

(30) Priority: **08.10.86 JP 237819/86**
**07.01.87 JP 462/87**

(43) Date of publication of application:
**13.04.88 Bulletin  88/15**

(45) Publication of the grant of the patent:
**22.04.92 Bulletin  92/17**

(84) Designated Contracting States:
**DE FR GB**

(56) References cited:
**EP-A- 0 141 500**
**EP-A- 0 171 155**
**FR-A- 2 103 071**
**US-A- 4 588 703**

(73) Proprietor: **TOHO TITANIUM CO. LTD.**
**13-31, Konan 2-chome**
**Minato-ku Tokyo 105(JP)**

(72) Inventor: **Murai, Atsushi**
**511-3-206, Chigasaki**
**Chigasaki-shi Kanagawa-ken(JP)**
Inventor: **Terano, Minoru**
**511-3-103, Chigasaki**
**Chigasaki-shi Kanagawa-ken(JP)**
Inventor: **Kimura, Kohei**
**2409, Okada Samukawamachi**
**Koza-gun Kanagawa-ken(JP)**
Inventor: **Inoue, Masuo**
**1-28, Hibarigaoka**
**Chigasaki-shi Kanagawa-ken(JP)**
Inventor: **Miyoshi, Katsuyoshi**
**2-15-43, Nango**
**Chigasaki-shi Kanagawa-ken(JP)**

(74) Representative: **Vossius & Partner**
**Siebertstrasse 4 P.O. Box 86 07 67**
**W-8000 München 86(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a high performance solid catalyst component for olefin polymerization catalysts. More particularly, the present invention relates to a new type solid catalyst component capable of exhibiting, when applied to the polymerization of olefins, a high polymerization activity combined with a high stereospecific performance, especially a surprisingly enhanced polymerization activity per titanium atom contained therein.

From the past, various kinds of olefins polymerization catalysts have been known and widely utilized which are derived from a solid catalyst component comprising a titanium halide and an organoaluminum compound and possess a high catalytic activity. According to these olefin polymerization catalysts, however, the yield of olefin polymers per catalyst component or per titanium atom contained therein does not reach a satisfactorily high level. Thus, a number of studies have been made hitherto for increasing the yield of olefin polymers per catalyst component. In case the yield of olefin polymers per titanium atom is low, the titanium component remaining in the resultant polymers having a strong corrosive action not only causes serious damage of the polymerization apparatus or various devices used in the after-treatment but also gives bad influence on the resultant polymer itself, such as deterioration of its quality or yellowing of the polymer. Hence, there was a strong demand in this art to solve such problems. Although studies have been made to solve the problems by minimizing the titanium content in the catalyst component or by increasing the yield of polymers per unit weight of the catalyst component, a satisfactory result has not yet been obtained for both of the above means. In the majority of cases, a deashing step was needed in the prior arts to eliminate the residual titanium component. As the deashing step requires a large amount of an alcohol or a chelating agent, facilities for recovering or regenerating the alcohol or chelating agent are necessary, thus creating many incidental problems in aspects of resource, energy and the like factors. These were important problems to be solved in carrying out the process for polymerization of olefins in a commercial scale. In recent years, a variety of proposals have been presented to overcome the above mentioned problems. In general, the yield of olefin polymers will be decreased if the titanium content in the catalyst component is suppressed. On the other hand, the titanium content in the catalyst component will become higher if an increased yield of olefin polymer per unit weight of the catalyst component is desired. Thus, it is the current status that any of the proposals cannot overcome the problem that the yield of olefin polymers per titanium atom is low.

In Japanese Patent Publn. No. Sho. 56-52041, for example, there is proposed that a magnesium halide is contacted with an anhydrous compound of an element belonging to Group I, II, III or IV of the Periodic Table to decrease the titanium content in the catalyst component thereby enhancing the activity per titanium. In this prior art, however, the polymerization activity per catalyst component is extremely low, and as the result, the polymerization activity per titanium cannot be said to be satisfactory. In Japanese Patent Appln. No. Sho. 61-000045 previously proposed by a part of the present inventors wherein a catalyst component is prapared by bringing a product obtained by suspending a dialkoxymagnesium such as diethoxymagnesium in an aromatic hydrocarbon and contacting the suspension with a titanium halide into further contact with a titanium halide in such manner that a diester of an aromatic dicarboxylic acid is allowed to coexist at any step in the procedure, the polymerization activity per catalyst component can remarkably be enhanced. As the titanium content in the catalyst component is higher in this case, however, the polymerization activity per titanium atom fails to show a fully satifactory value.

As the amount of expensive organoaluminum compound used at the time of polymerization is defined in many cases by an Al/Ti molar ratio, a higher titanium content in the catalyst component substantially means the use of a large amount of the organoaluminum compound, thus causing an increase in a unit price of the catalyst in terms of a total catalyst including the organoaluminum compound even if the catalytic activity shows a high value of a certain degree.

Under the circumstances, there is a great demand in this art to develop a new type solid catalyst component which overcomes the problems seen in the prior art catalyst components and can increase the yield of stereospecific olefin polymers per catalyst component.

Accordingly, it is an object of the present invention to provide a new solid catalyst component which has a low titanium content but exhibits an enhanced polymerization activity per titanium atom contained in the catalyst component.

It is another object of the present invention to provide a new solid catalyst component which can afford olefin polymers substantially free of any residual titanium and thus requires no deashing treatment for the resultant polymers.

Taking the above mentioned circumstances into consideration, the present inventors have made extensive researches for developing a new solid catalyst component for olefin polymerization catalysts,

2

which overcomes the various drawbacks seen in the prior art catalyst components and enables the production of sterospecific polymers in a higher yield per titanium atom contained in the catalyst component. As a result of such extensive researches, it has now been found surprisingly that a solid catalyst component derived from diethoxymagnesium, titanium tetrachloride, a diester of an aromatic carboxylic acid, calcium chloride and optionally a specific silicon compound according to specific treatments conducted in a special order of succession under specific conditions has a remarkably high polymerization activity per titanium atom combined with stereospecific performance and scarcely incurs problems of corrosion of apparatus and deterioration in quality of the resultant polymer. The present invention has been accomplished on the basis of the above finding.

In accordance with one embodiment of the present invention, there is provided a solid catalyst component for olefin polymerization catalysts prepared by suspending diethoxymagnesium (a) in an aromatic hydrocarbon (b) which is liquid at normal temperature and bringing the resultant into a first contact with titanium tetrachloride (c), to form a product and bringing it into a second contact with titanium tetrachloride (c) in such manner that a diester (d) of an aromatic dicarboxylic acid and calcium chloride (e) are allowed to coexist at any stage of the above suspending and/or contacts, the calcium chloride (e) being used in an amount of 1-2 grams per gram of the diethoxy-magnesium (a).

In accordance with another embodiment of the present invention, there is provided a solid catalyst component for olefin polymerization catalysts prepared by subjecting diethoxy-magnesium (a), calcium chloride (e) and a silicon compound (f) of the general formula: $Si(OR)_4$ (wherein R is an alkyl or aryl group) together to a contact treatment in the presence of an organic solvent (g), suspending the treated composition in an aromatic hydrocarbon (b) which is liquid at normal temperature and bringing the suspension into a first contact with titanium tetrachloride (c) to form a product and bringing it into a second contact with titanium tetrachloride (c) in such manner that a diester (d) or an aromatic dicarboxylic acid and calcium chloride (e) are allowed to coexist at any stage of the above suspending and/or contacts with the exception of the contact treatment, the calcium chloride (e) being used in an amount of 1-2 per gram of the diethoxymagnesium (a).

The solid catalyst component of the present invention has various features as compared with the prior art solid catalyst components showing inferior polymerization activity per titanium atom contained therein. One of the features of this invention resides in the use of a combination of specific sorts of ingredients with specific conditions. In the solid catalyst component of this invention, diethoxymagnesium, titanium tetrachloride, an aromatic hydrocarbon, calcium chloride, a diester of an aromatic carboxylic acid and a specific silicon compound are used as constituents for the catalyst component under specific conditions, i.e. specific treatments in a special order of succession. Another feature resides in the mode of contact with titanium tetrachloride, in the course of preparing the solid catalyst component, titanium tetrachloride is brought into contact twice with the other ingredients. The polymerization activity of the catalyst component can remarkably be enhanced by such special contact mode.

The aromatic hydrocarbon (b) which is liquid at normal temperature [referred to hereinafter simply as the substance (b)] is preferably selected from benzene and alkylbenzenes, e.g. alkylbenzenes having 1-3 alkyl groups each with 1-4 carbon atoms. Examples of the alkylbenzenes include toluene, xylene, trimethylbenzene and ethylbenzene. The use of toluene is preferable in the present invention. Besides these aromatic hydrocarbons (b), halogenated aromatic hydrocarbons such as o-dichlorobenzene can also be used as the substance (b).

The diester (d) of an aromatic carboxylic acid [referred to hereinafter simply as the substance (d)] is usually selected from dialkyl esters of phenylenedicarboxylic acids. The two alkyl moieties may be the same or different and each with 1-8 carbon atoms. The phenylenedicarboxylic acid is preferably phthalic acid or terephthalic acid. Illustrative of the preferable substance (d) are, for example, dimethyl phthalate, diethyl phthalate, dipropyl phthalate, diisopropyl phthalate, dibutyl phthalate, diisobutyl phthalate, diamyl phthalate, diisoamyl phthalate, mekthyl ethyl phthalate, methyl propyl phthalate, methyl butyl phthalate, methyl isobutyl phthalate, ethyl propyl phthalate, ethyl butyl phthalate, ethyl isobutyl phthalate, propyl butyl phthalate, propyl isobutyl phthalate, propyl amyl phthalate, butyl amyl phthalate, dimethyl terephthalate, diethyl terephthalate, dipropyl terephthalate, dioosopropyl terephthalate, dibutyl terephthalate, diisobutyl terephthalate, diamyl terephthalate, diisoamyl terephthalate, methyl ethyl terephthalate, methyl propyl terephthalate, methyl butyl terephthalate, methyl isobutyl terephthalate, ethyl propyl terephthalate, ethyl butyl terephthalate, ethyl isobutyl terephthalate, propyl butyl terephthalate, propyl isobutyl terephthalate, propyl amyl terephthalate and butyl amyl terephthalate. Among these diesters, lower $(C_1-C_4)$ dialkyl diesters wherein the alkyl groups are identical with each other are most preferable, such as diethyl phthalate, dipropyl phthalate, dibutyl phthalate, diisobutyl phthalate, diamyl phthalate, diethyl terephthalate, dipropyl terephthalate, dibutyl terephthalate, diisobutyl terephthalate and diamyl terephthalate.

The silicon compound (f) of the general formula: Si(OR)$_4$ wherein R is an alkyl or aryl group [referred to hereinafter simply as the substance (f)] preferably has 1-4 carbon atoms in the alkyl moiety and a phenyl or a C$_1$-C$_4$ alkyl-phenyl as the aryl group. Illustrative of the substance (f) are, for example, tetramethoxysilane, tetraethoxysilane, tetrapropoxysilane, tetraphenoxysilane and tetra(methylphenoxy)silane. The use of tetraethoxysilane is preferable as the substance (f).

The organic solvent (g) [referred to hereinafter simply as the substance (g)] may be of an aliphatic or aromatic nature so far as it is liquid at normal temperature. Usually, n-hexane or n-heptane which is easily commercially available can advantageously be employed.

The diethoxymagnesium (a) [referred to hereinafter simply as the substance (a)], titanium tetrachloride (c) [referred to hereinafter simply as the substance (c)] and calcium chloride (e) [referred to hereinafter simply as the substance (e)] are all commercially available or may be prepared according to the process known per se.

In the firstly mentioned embodiment, the substance (e) is used in an amount of 1-2 g per gram of the substance (a). As to the other substances, no particular limitation exists in their proportion so far as it gives no bad influence on the quality of the resultant catalyst. Usually, however, the substance (c) is used in an amount of at least 1 g, preferably at least 2 g per gram of the substance (a)at the time of the first contact with the substance (a) or with the substance (a) and the substance (e). The substance (b) is used in an appropriate amount so far as the amount is sufficient enough to form a suspension with the substance (a) or with the substance (a) and the substance (e). The substance (d) is usually used in an amount within the range of 0.05-10 m-mol, preferably 0.2-5 m-mol per gram of the total amount of the substance (a) and the substance (e). The amount of the substance (c) used for the second contact is usually at least 1 g, preferably at least 2 g per gram of the substance (a), as in the case of the first contact.

A complicate limitation exists in the order of contact of the invidual ingredients. Thus, there are some preferable modes for preparing the solid catalyst components in connection with the order of contact of the individual ingredients. According to a first mode, the substance (a) and the substance (e) are subjected to copulverization by the aid of a ball mill, a vibrating mill, a column grinder or the like finely dividing means and the resultant copulverized composition is contacted in the presence of the substance (d) with the substance (b) and the substance (c). A product thus obtained is then contacted again with the substance (c). According to the second mode, the substance (a) and the substance (e) are suspended in the substance (b), and the resultant suspension is contacted in the presence of the substance (d) with the substance (c). A product thus obtained is then contacted again with the substance (c). According to the third mode, the substance (a) is suspended in the substance (b) and then contacted with the substance (c) in the presence of the substance (d). A product thus obtained is mixed with the substance (e) and then contacted again with the substance (c). According to the fourth mode, the substance (a) is suspended in the substance (b) and then contacted with the substance (c) in the presence of the substance (d). A product thus obtained is contacted again with the substance (c) in the coexistence of the substance (e). The temperature during the first contact wherein the substance (a) and the substance (b) are contacted with the substance (c) is usually within the range of 50-136°C, preferably 80-136°C. The time for the above first contact is usually within a period from 5 minutes to 100 hours, preferably from 5 minutes to 10 hours. After this first contact, the resultant product may be washed repeatedly with the substance (b) or other organic solvents, if necessary. The product is successively brought into the second contact with the substance (c). This second contact is carried out under the same conditions as in the first contact, e.g. at a temperature of 50-136°C, preferably 80-136°C and within a period from 5 minutes to 100 hours, preferably from 5 minutes to 10 hours. The substance (b) can be used singly or as a mixture or, if desired, together with other organic solvents. The solid catalyst component thus obtained may be washed, if necessary, with an organic solvent such as n-heptane. A series of these operations in the preparation of the solid catalyst component are usually carried out in the absence of air and moisture to prevent any deterioration of the quality of the solid catalyst component.

In the secondly mentioned embodiment of this invention, the substance (e) is used in an amount of 1-2 g per gram of the substance (a) as in the firstly mentioned embodiment. As to the other substances, no particular limitation exists in their proportion so far as it gives no bad influence on the quality of the resultant solid catalyst component. Usually, however, the substance (f) is used in an amount within the range of 0.1-10 m-mol, preferably 0.5-3 m-mol per gram of the total amount of the substance (a) and the substance (e). The amount of the substance (c) is usually used in an amount of at least 1 g, preferably at least 2 g per gram of the substance (a), as in the case of the firstly mentioned embodiment, at the time of the first contact with the substance (a) or with the substance (a) and the substance (e). The substance (b) is used in any suitable amount as in the firstly mentioned embodiment so far as the amount is sufficient enough to form a suspension with the substance (a) or with the substance (a) and the substance (e). Similarly, the

EP 0 263 516 B1

substance (d) is usually used in an amount within the range of 0.05-10 m-mol, preferably 0.2-5 m-mol per gram of the total amount of the substance (a) and the substance (e). The amount of the substance (c) used for the second contact is usually at least 1 g, preferably at least 2 g per gram of the substance (a), as in the case of the first contact.

In the secondly mentioned embodiment, too, a complicate limitation exists in the order of contact of the individual ingredients. Thus, there are some preferable modes for preparing the solid catalyst components in connection with the order of contact of the individual ingredients. According to the first mode, the substance (a) and the substance (e) are copulverized by the aid of a vibrating mill, a ball mill, a column grinder or the like means. The copulverization of the substance (a) and the substance (e) is usually effected with a period from 5 minutes to 100 hours, preferably from 5 minutes to 10 hours. The resultant copulverized composition is subjected to a contact treatment with the substance (f) in the presence of the substance (g) and then contacted with the substances (b) and (c) in the presence of the substance (d). The product thus obtained is then brought into further contact with the substance (c). According to the second mode, the substance (a) and the substance (e) are contacted with each other in the presence of the substance (g) and the mixture is then subjected to a contact treatment with the substance (f). The resultant composition is contacted with the substance (b) and the substance (c) in the presence of the substance (d). The product thus obtained is further contacted with the substance (c).

It is an indispensable condition in the present invention that the substance (a), the substance (e) and the substance (f) have to be contacted with one another in the presence of the substance (g). The temperature in this case is usually within the range of 0-100°C and the time for the contact is usually within a period of 5 minutes to 100 hours, preferably from 5 minutes to 10 hours. The substance (g) is used in an amount sufficient enough to make a mixture of the substance (a), (e) and (f) liquid or slurried. After the contact treatment, the composition may repeatedly be washed with an organic solvent, if necessary. The composition is then brought into the first contact with the substance (c) in the presence of the substance (b). The temperature during this first contact is usually within the range of 50-136°C, preferably 80-136°C. The time for this first contact is usually within a period from 5 minutes to 100 hours, preferably from 5 minutes to 10 hours. After this first contact, the resultant product may be washed repeatedly with the substance (b) or other inert organic solvents, if necessary, as in the firstly mentioned embodiment and then successively brought into the second contact with the substance (c). This second contact is carried out under the same conditions as in the first contact, e.g. at a temperature of 50-136°C, preferably 80-136°C and within a period from 5 minutes to 100 hours, preferably from 5 minutes to 10 hours. The substance (b) can be used singly or as a mixture or, if desired, together with other inert organic solvents. The solid catalyst component thus obtained may be washed, if necessary, with an inert organic solvent such as n-heptane. A series of these operations in the preparation of the solid catalyst component are usually carried out in the absence of air and moisture to prevent any deterioration of the quality of the resultant solid catalyst component.

The solid catalyst component obtained according to the firstly or secondly mentioned embodiment of this invention is used as such for the preparation of an olefin polymerization catalysts or may be stored in dry state, in wet state or in an inert medium for a prolonged period of time without any reduction in its performance.

In the preparation of an olefin polymerization catalyst, the solid catalyst component is combined with an organoaluminum compound such as triethylaluminum. On the use of such olefin polymerization catalyst for polymerizing olefins, it is preferable to use an electron donor, for example, an organosilicon compound such as phenyltriethoxysilane jointly with the catalyst. A polymerization reaction of olefins can be carried out in the presence or absence of an organic solvent. An olefin monomer can be used for this reaction either in gaseous or liquid state. Thus, the term "polymerization" merely used herein means any type of the polymerization including homopolymerization and copolymerization of olefins as well as any mode of the polymerizaton including gas or bulk polymerization in the absence of any polymerization solvent and slurry or solution polymerization where a polymerization solvent is used. The polymerization temperature is below 200°C, preferably below 100°C and the polymerization pressure is below 98 bar$\cdot$G (100 kg/cm$^2\cdot$G), preferably below 49 bar$\cdot$G (50 kg/cm$^2\cdot$G).

Olefins utilizable for the polymerization or copolymerization wherein the solid catalyst of this invention is used are $C_2$-$C_4$ $\alpha$-olefins and involve ethylene, propylene and butene-1.

In case the polymerization of olefin is carried out by using a catalyst derived from the solid catalyst component of this invention, the yield of olefin polymers per solid catalyst component, or in other words, the polymerization activity per solid catalyst component is remarkably high notwithstanding the titanium content (titanium carrier ratio) in the solid catalyst component is extremely low, and as the result, the residual titanium content in the resultant polymer is so negligible that any deashing treatment is scarecely necessary and there arises no problem of deterioration and yellowing of the resultant polymer.

5

In many cases, the molar ratio of Al in an organoaluminum compound to Ti in the solid catalyst component, i.e. Al/Ti molar ratio, is usually fixed within a certain range in the polymerization of olefins. In such case, the yield of olefin polymers per catalyst component is remarkably high without varying the Al/Ti molar ratio notwithstanding the titanium content in the solid catalyst component is extremely low. Consequently, the amount of an organoaluminum compound to be used together can be decreased to reduce cost of the total catalyst.

In case the polymerization of olefins is carried out by the aid of a catalyst derived from the solid catalyst component of this invention, reduction in the polymerization activity with the lapse of time is extremely low.

Further, a catalyst derived from the solid catalyst component of this invention achieves an additional merit that its catalytic activity and stereospecific performance are scarecely deteriorated in case of performing the polymerization of olefins in the co-existence of hydrogen.

The present invention will now be illustrated in more detail by way of Examples and Comparative Examples.

Example 1

(1) Preparation of the solid catalyst component:

In a 1.2 liter vibrating mill pot charged up to 3/5 of the whole capacity with stainless steel balls of 25 mm⌀ in diameter, the air in which had been substituted sufficiently with nitrogen, were placed 45 g of calcium chloride and 45 g of diethoxymagnesium. The mixture was subjected to a co-grinding treatment operated for 5 hours at room temperature at a vibration numberof 1430 V.p.m. and an amplitude of 3.5 mm. In a 500 ml round-bottomed flask equipped with a stirrer, the air in which had been substituted sufficiently with nitrogen, were placed 9 g of the composition obtained by the preceding pulverization treatment and 50 ml of toluene. The mixture was well contacted together for 5 minutes. To the mixture was added 50 ml of $TiCl_4$, and the mixture was heated up to 90°C. After adding 1.9 g of n-dibutyl phthalate, the mixture was heated up to 115°C and reacted together for 2 hours under agitation. The resultant solid product was collected by filtration and washed with 100 ml of fresh toluene at 90°C. To the solid product were then added 40 ml of $TiCl_4$ and 60 ml of toluene, and the mixture was reacted together for 2 hours at 115°C with stirring. After completion of the reaction, the reaction mixture was cooled down to 40°C and washed repeatedly with n-heptane. The washing treatment was finished at the time chlorine was no longer detected in the washings, whereby a solid catalyst component was obtained. By the way, a solid matter and a liquid in the solid catalyst component were separated and the solid matter was subjected to elementary analysis whereupon the contents in terms of % by weight were as follows: Ca 16.5, Mg 9.7, Cl 61.2 and Ti 1.21.

(2) Polymerization:

In a 2.0 liter autoclave equipped with a stirrer, the air in which had been replaced entirely by nitrogen, were placed 700 ml of n-heptane. The autoclave was charged successively with 181 mg of triethylaluminum, 38 mg of phenyltriethoxysilane and the solid catalyst component in an amount of 0.3 mg in terms of titanium, while maintaining the nitrogen atmosphere. Into the autoclave was then charged 120 ml of hydrogen and the mixture was heated to 70°C. Gaseous propylene was introduced into the autoclave and subjected to polymerization reaction for 2 hours while maintaining the pressure at 5.9 bar•G (6 kg/cm²•G).

After the polymerization reaction, the resultant solid polymer was collected by filtration and warmed at 80°C under reduced pressure for drying. On the other hand, the filtrate was concentrated to obtain a polymer having been dissolved in the polymerization solvent. The solid polymer was extracted with boiling n-heptane for 6 hours to obtain a polymer insoluble in n-heptane. Designating the amount of the polymer dissolved in the polymerization solvent as (A), the amount of the solid polymer as (B) and the amount of the polymer insoluble in n-heptane as (C), the polymerization activity (D) per Ti of solid catalyst component can be calculated according to the following formula:

$$(D) = \frac{[(A) + (B)] \ (g)}{\text{Amount of Ti of the solid catalyst component (mg)}}.$$

The yield (E) of the crystalline polymer is calculated according to the following formula:

$$(E) = \frac{(C)}{(B)} \times 100 \ (\%) \ .$$

The yield (F) of the total crystalline polymer is calculated according to the following formula:

$$(F) = \frac{(C)}{(A) + (B)} \times 100 \ (\%) \ .$$

A result of the polymerization is shown in Table 1 wherein the melt index of the resultant polymer is designated as (G).

Example 2

The preparation of a solid catalyst component was carried out in the same manner as illustrated in Example 1 except that the amount of n-dibutyl phthalate was 2.2 g. By the way, a solid matter and a liquid in the resultant solid catalyst component were separated and the solid matter was subjected to elementary analysis whereupon the contents in terms of % by weight were as follows: Ca 16.8, Mg 9.8, Cl 61.0 and Ti 1.25.

As experiment for polymerization was carried out in the same manner as described in Example 1. A result of the experiment is shown in Table 1.

Example 3

An experiment for polymerization was carried out in the same manner as described in Example 1 except that 65 mg of diphenyldimethoxysilane was used in place of phenyltriethoxysilane. A result of the experiment is shown in Table 1.

Example 4

(1) Preparation of a solid catalyst component:

In a 500 ml round-bottomed flask equipped with a stirrer, the air in which has been substituted sufficiently with nitrogen, were placed 4.5 g of calcium chloride, 4.5 g of diethoxymagnesium and 50 ml of toluene. The mixture was contacted together for 1 hour at 50°C under agitation. To the mixture was added 50 ml of $TiCl_4$, and the mixture was heated up to 90°C. After adding 1.9 g of n-butyl phthalate, the mixture was further heated up to 115°C and reacted for 2 hours under agitation. The resultant solid product was collected by filtration and washed with 100 ml of fresh toluene at 90°C. To the solid product were then added 40 ml of $TiCl_4$ and 60 ml of toluene, and the mixture was reacted together for 2 hours at 115°C with stirring. After completion of the reaction, the mixture was cooled down to 40°C and washed repeatedly with n-heptane. The washing treatment was finished at the time chlorine was no longer detected in the washings, whereby a solid catalyst component was obtained. By the way, a solid matter and a liquid in the solid catalyst component were separated and the solid matter was subjected to elementary analysis whereupon the contents in terms of % by weight were as follows: Ca 16.7, Mg 9.9, Cl 60.8 and Ti 1.14.

(2) Polymerization

An experiment for polymerization was carried out in the same manner as described in Example 1. A result of the experiment is shown in Table 1.

Example 5

(1) Preparation of a solid catalyst component:

In a 500 ml rount-bottomed flask equipped with a stirrer, the air in which had been substituted sufficiently with nitrogen, were placed 10 g of diethoxymagnesium and 60 ml of toluene. The mixture was suspended for 5 minutes with stirring. To the mixture was added 20 ml of TiCl$_4$ and the mixture was heated up to 90°C. After adding 2.7 g of n-dibutyl phthalate, the mixture was further heated up to 115°C and reacted for 2 hours under agitation. After completion of the reaction, the resultant solid product was collected by filtration and washed with 80 ml of fresh toluene at 90°C. To the solid product were then added 120 ml of toluene and 10 g of CaCl$_2$, and the mixture was reacted together for 2 hours at 90°C. After adding 40 ml of TiCl$_4$, the mixture was heated up to 115°C and reacted together for 2 hours. After completion of the reaction, the reaction mixture was cooled down to 40°C and washed repeatedly with n-heptane. The washing treatment was finished at the time chlorine was no longer detected in the washings whereupon a solid catalyst component was obtained. By the way, a solid matter and a liquid in the solid catalyst component were separated and the solid matter was subjected to elementary analysis whereupon the contents in terms of % by weight were as follows: Ca 16.7, Mg 10.2, Cl 60.8 and Ti 1.30.

(2) Polymerization

An experiment for polymerization was carried out in the same manner as described in Example 1. A result of the experiment is shown in Table 1.

Example 6

(1) Preparation of a solid catalyst component:

In a 500 ml round-bottomed flask equipped with a stirrer, the air in which had been substituted sufficiently with nitrogen, were placed 4.5 g of diethoxymagnesium and 20 ml of toluene. The mixture was suspended for 5 minutes with stirring. To the mixture was added 60 ml of TiCl$_4$ and the mixture was heated up to 90°C. After adding 1.9 g of n-dibutyl phthalate, the mixture was further heated up to 115°C and reacted under agitation.

On the other hand, in a 500 ml round-bottomed flask equipped with a stirrer, the air in which had been substituted sufficiently with nitrogen, were placed 4.5 g of calcium chloride and 20 ml of toluene. The mixture was agitated for 5 minutes at 90°C to form a suspension. Then, the whole suspension was added to the above resultant product in the first flask and the whole mixture was contacted together for 2 hours at 115°C under agitation. The resultant solid product was collected by filtration and washed with 100 ml of fresh toluene at 90°C. To the solid product were then added 60 ml of TiCl$_4$ and 40 ml of toluene, and the mixture was reacted together for 2 hours at 1115°C with stirring.

After completion of the reaction, the reaction mixture was cooled down to 40°C and washed repeatedly with n-heptane. The washing treatment was finished at the time chlorine was no longer detected in the washings, whereby a solid catalyst component was obtained. By the way, a solid matter and a liquid in the solid catalyst component were separated and the solid matter was subjected to elementary analysis whereupon the contents in terms of % by weight were as follows: Ca 16.6, Mg 9.8, Cl 61.0 and Ti 1.38.

(2) Polymerization

An experiment for polymerization was carried out in the same manner as described in Example 1. A result of the experiment is shown in Table 1.

Example 7

(1) Preparation of the solid catalyst component:

In a 1.2 liter vibrating mill pot charged up to 3/5 of the whole capacity with stainless steel balls of 25 mm∅ in diameter, the air in which has been substituted sufficiently with nitrogen, were placed 45 g of calcium chloride and 45 g of diethoxymagnesium. The mixture was subjected to a co-grinding treatment operated for 5 hours at room temperature at a vibration number of 1430 V.p.m. and an amplitude of 3.5 mm.

In a 500 ml round-bottomed flask equipped with a stirrer, the air in which had been substituted sufficiently with nitrogen, were placed 9 g of the composition obtained by the preceding pulverization treatment, 1.9 g of tetraethoxysilane and 75 ml of n-heptane. The mixture was agitated for 2 hours at 80°C with stirring. The reaction mixture was washed with n-heptane and the supernatant liquid was removed. The obtained mixture was contacted with 50 ml of toluene for 5 minutes with stirring.

To the mixture was added 50 ml of $TiCl_4$, and the mixture was heated up to 90°C. After adding 1.9 g of n-dibutyl phthalate, the mixture was heated up to 115°C and reacted together for 2 hours under agitation. The resultant solid product was collected by filtration and washed with 100 ml of fresh toluene at 90°C. To the solid product were then added 40 ml of $TiCl_4$ and 60 ml of toluene, and the mixture was reacted together for 2 hours at 115°C with stirring. After completion of the reaction, the reaction mixture was cooled down to 40°C and washed repeatedly with n-heptane. The washing treatment was finished at the time chlorine was no longer detected in the washings, whereby a solid catalyst component was obtained. By the way, a solid matter and a liquid in the solid catalyst component were separated and the solid matter was subjected to elementary analysis whereupon the contents in terms of % by weight were as follows: Ca 16.7, Mg 9.9, Cl 61.0 and Ti 1.24.

(2) Polymerization

An experiment for polymerization was carried out in the same manner as described in Example 1. A result of the experiment is shown in Table 1.

Example 8

The preparation of a solid catalyst component was carried out in the same manner as illustrated in Example 7 except that the amount of tetraethoxysilane was 2.5 g. By the way, a solid matter and a liquid in the resultant solid catalyst component were separated and the solid matter was subjected to elementary analysis whereupon the contents in terms of % by weight were as follows: Ca 16.7, Mg 9.7, Cl 61.4 and Ti 1.18.

An experiment for polymerization was carried out in the same manner as described in Example 1. A result of the experiment is shown in Table 1.

Example 9

An experiment for polymerization was carried out in the same manner as described In Example 7 except that 39 mg of diphenyldimethoxysilane was used in place of phenyltriethoxysilane. A result of the experiment is shown in Table 1.

Example 10

(1) Preparation of a solid catalyst component:

In a 500 ml round-bottomed flask equipped with a stirrer, the air in which had been substituted sufficiently with nitrogen, were placed 4.5 g of calcium chloride, 4.5 g of diethoxymagnesium and 75 ml of n-heptane. To the mixture was added 1.9 g of tetraethoxysilane. The obtained mixture was contacted together for 2 hours at 80°C under agitation. The reaction mixture was washed with n-heptane and the supernatant liquid was removed. To the obtained product were added 50 ml of toluene and 50 ml of $TiCl_4$. The whole mixture was heated up to 90°C. To the heated mixture was added 1.9 g of n-dibutyl phthalate. The obtained mixture was further heated up to 115°C and reacted for 2 hours under agitation. The resultant solid product was collected by filtration and washed with 100 ml of fresh toluene at 90°C. To the solid product were then added 40 ml of $TiCl_4$ and 60 ml of toluene, and the mixture was reacted together for 2 hours at 115°C with stirring. After completion of the reaction, the reaction mixture was cooled down to 40°C and washed repeatedly with n-heptane. The washing treatment was finished at the time chlorine was no longer detected in the washings, whereby a solid catalyst component was obtained. By the way, a solid matter and a liquid in the solid catalyst component were separated and the solid matter was subjected to elementary analysis whereupon the contents in terms of % by weight were as follows: Ca 17.0, Mg 9.8, Cl 60.6 and Ti 1.20.

9

(2) Polymerization

An experiment for polymerization was carried out in the same manner as described in Example 1. A result of the experiment is shown in Table 1.

Comparative Example 1

An experiment was carried out in the same manner as illustrated in Example 4 except that calcium chloride was not used but 9 g of diethoxymagnesium and 2.5 g of n-dibutyl phthalate were used at the time or preparing the solid catalyst component. In this case, a solid matter and a liquid in the solid catalyst component were separated and the solid matter was subjectd to elementary analysis whereupon the contents in terms of % by weight as follows: Mg 18, Cl 62 and Ti 3.12.

On polymerization of propylene, an experiment was carried out in the same manner as illustrated in Example 1 except that 0.5 mg of the solid catalyst component in terms of titanium atom, 301 mg of triethylaluminum and 64 mg of phenyltriethoxysilane were used. A result of the experiment is shown in Table 1.

Comparative Example 2

(1) Preparation of a solid catalyst component:

In a 1.0 liter vibrating mill pot charged up to 3/5 of the whole capacity with stainless steel balls of 25 mm$\emptyset$ were placed 5 g of anhydrous $MgCl_2$, 40 g of anhydrous LiCl and 5.4 g of $TiCl_4$ in nitrogen atmosphere. The mixture was subjected to a pulverizing treatment for 16 hours at a vibration number of 1460 v.p.m. and an amplitude of 3.5 mm.

In a 500 ml round-bottomed flask equipped with a stirrer, the air in which had been substituted sufficiently with nitrogen, were placed 5 g of the above pulverized product suspended in 120 ml of anhydrous n-heptane and 0.84 g of N,N′ , N″, N‴ -tetramethylethylenediamine. The mixture was allowed to stand for 45 minutes at room temperature with stirring. The mixture was then diluted with 300 ml of n-heptane to form a catalyst component. A solid matter and a liquid in the catalyst component was separated and the solid matter was subjected to elementary analysis whereupon the Ti content therein was 1.02 % by weight.

(2) Polymerization:

An experiment was carried out in the same manner as illustrated in Example 1 except that 0.5 mg of the catalyst component in terms of Ti atom and 120 mg of triethylaluminum were used but phenyltriethoxysilane was not used. A result of the experiment is also shown in Table 1.

Table 1

|  | Examples | | | | | | | | | | Comparative Examples | |
|---|---|---|---|---|---|---|---|---|---|---|---|---|
|  | 1 | 2 | 3 | 4 | 5 | 6 | 7 | 8 | 9 | 10 | 1 | 2 |
| Amount of the polymer dissolved in the polymerization solvent (A) (g) | 3.3 | 3.0 | 3.6 | 3.7 | 2.5 | 3.2 | 3.1 | 2.9 | 3.3 | 3.0 | 3.1 | 4.5 |
| Amount of the solid polymer (B) (g) | 273 | 249 | 306 | 285 | 246 | 258 | 307 | 310 | 350 | 299 | 244 | 16.1 |
| Amount of the polymer insoluble in boiling n-heptane (C) (g) | 269 | 246 | 302 | 281 | 243 | 254 | 303 | 306 | 346 | 294 | 241 | 11.6 |
| Polymerization activity per Ti of solid catalyst component (D) | 920 | 840 | 1030 | 960 | 830 | 870 | 1060 | 1040 | 1170 | 1000 | 490 | 41 |
| Yield of the crystalline polymer (E) (%) | 98.5 | 98.7 | 98.5 | 98.5 | 98.8 | 98.5 | 98.8 | 98.8 | 98.7 | 98.5 | 98.6 | 72.1 |
| Yield of the total crystalline polymer (F) (%) | 97.3 | 97.5 | 97.4 | 97.2 | 97.8 | 97.3 | 97.8 | 97.9 | 97.8 | 97.5 | 97.4 | 56.2 |
| MI of the resultant polymer (G) | 5.2 | 6.8 | 4.8 | 7.3 | 7.6 | 6.3 | 6.2 | 7.8 | 3.9 | 6.6 | 6.5 | 8.5 |

Claims

1.   A solid catalyst component for olefin polymerization catalysts prepared by suspending diethoxymagnesium (a) in an aromatic hydrocarbon (b) which is liquid at normal temperature and bringing the suspension into a first contact with titanium tetrachloride (c) to form a product and bringing it into a second contact with titanium tetrachloride (c) in such manner that a diester (d) of an aromatic dicarboxylic acid and calcium chloride (e) are allowed to coexist at any stage of the above suspending and/or contacts, the calcium chloride (e) being used in an amount of 1-2 grams per gram of the diethoxymagnesium (a).

2. A solid catalyst component according to claim 1, wherein a product obtained by previously copulverizing the diethoxymagnesium (a) and the calcium chloride (e), suspending the resultant pulverized composition in the aromatic hydrocarbon (b), and bringing the suspension into a first contact with the titanium tetrachloride (c) is brought into a second contact with the titanium tetrachloride (c) in such manner that the diester (d) is allowed to coexist during the above suspending and/or contacts.

3. A solid catalyst component according to claim 1, wherein a product obtained by suspending the diethoxymagnesium (a) and the calcium chloride (e) in the aromatic hydrocarbon (b) under agitation and bringing the suspension into the first contact with the titanium tetrachloride (c) is brought into the second contact with titanium tetrachloride (c) in such manner that the diester (d) is allowed to coexist during the above suspending and/or contacts.

4. A solid catalyst component according to claim 1, wherein a product obtained by suspending the diethoxymagnesium (a) in the aromatic hydrocarbon (b) and bringing the suspension into the first contact with the titanium tetrachloride (c) in the coexistence of calcium chloride (e) is brought into the second contact with the titanium tetrachloride (c) in such manner that the diester (d) is allowed to coexist during the above suspending and/or contacts.

5. A solid catalyst component according to claim 1, wherein a product obtained by suspending the diethoxymagnesium (a) in the aromatic hydrocarbon (b) and bringing the suspension into the first contact with the titanium tetrachloride (c) is brought into the second contact with the titanium tetrachloride (c) in the coexistence of the calcium chloride (e) in such manner that the diester (d) is allowed to coexist during the above suspending and/or contacts.

6. A solid catalyst component according to claim 1 to 5, wherein the proportion of the titanium tetrachloride (c) to the diethoxymagnesium (a) at the time of the first or second contact is such that the titanium tetrachloride (c) is used in an amount of at least 1 g per gram of the diethoxymagnesium (a).

7. A solid catalyst component according to claim 6, wherein the proportion of the titanium tetrachloride (c) to the diethoxymagnesium (a) at the first or second contact is such that the titanium tetrachloride (c) is used in an amount of at least 2 g per gram of the diethoxymagnesium.

8. A solid catalyst component for olefin polymerization catalysts prepared by subjecting diethoxymagnesium (a), calcium chloride (e) and a silicon compound (f) of the general formula: $Si(OR)_4$ (wherein R is an alkyl or aryl group) together to a contact treatment in the presence of an organic solvent (g), suspending the treated composition in an aromatic hydrocarbon (b) which is liquid at normal temperature and bringing the suspension into a first contact with titanium tetrachloride (c) to form a product and bringing it to a second contact with titanium tetrachloride (c) in such manner that a diester (d) of an aromatic dicarboxylic acid and calcium chloride (e) are allowed to coexist at any stage of the abov suspending and/or contacts with the exception of the contact treatment, the calcium chloride (e) being used in an amount of 1-2 g per gram of the diethoxymagnesium (a).

9. A solid catalyst component according to claim 8, wherein a product obtained by previously copulverizing the diethoxymagnesium (a) and the calcium chloride (e), subjecting the resulting copulverized composition to a contact treatment with the silicon compound (f) in the presence of the organic solvent (g), suspending the treated composition in the aromatic hydrocarbon (b), and therefore bringing the suspension into a first contact with the titanium tetrachloride (c) is brought into a second contact with the titanium tetrachloride (c) in such manner that the diester (d) is allowed to coexist during the above suspending and/or contacts with the exception of the contact treatment.

10. A solid catalyst component according to claim 8, wherein a product obtained by mixing the diethoxymagnesium (a) with the calcium chloride (e) in the organic solvent (g), subjecting the mixture to contact treatment with the silicon compound (f), suspending the treated composition in the aromatic hydrocarbon (b), and bringing the suspension into a first contact with the titanium tetrachloride (c) is brought into a second contact with the titanium tetrachloride (c) in such manner that the diester (d) is allowed to coexist during the above suspending and/or contacts with the exception of the contact treatment.

11. A solid catalyst component according to claims 1 to 5 and 8 to 10, wherein the aromatic hydrocarbon (b) is benzene or an alkylbezene.

12. A solid catalyst component according to claim 11, wherein the aromatic hydrocarbon (b) is toluene.

13. A solid catalyst component according to claims 1 to 5 and 8 to 10, wherein the diester (d) is a diester of phthalic or terephthalic acid.

14. A solid catalyst component according to claim 13 , wherein the diester (d) is dimethyl phthalate, dimethyl terephthalate, diethyl phthalate, diethyl terephthalate, dipropyl phthalate, dipropyl terephthalate, dibutyl phthalate, dibutyl terephthalate, diisobutyl phthalate, diamyl phthalate, diiisoamyl phthalate, ethyl isobutyl phthalate or ethyl propyl phthalate.

15. A solid catalyst component according to claims 8 to 10, wherein the silicon compound (f) is tetra($C_1$-$C_4$ alkoxy)silane and tetraphenoxysilane.

16. A solid catalyst component according to claim 15, wherein the silicon compound (f) is tetraethoxysilane.

17. A solid catalyst component according to claims 8 to 10, wherein the organic solvent (g) is selected from aromatic and aliphatic hydrocarbons which are liquid at normal temperature.

18. A solid catalyst component according to claim 17, wherein the organic solvent (g) is n-heptane or n-hexane.

19. A solid catalyst component according to claims 8 to 10, wherein the silicon compound (f) is used in an amount of 0.1-10 m-mol per gram of the total amount of the diethoxymagnesium (a) and the calcium chloride (e).

20. A solid catalyst component according to claim 19, wherein the silicon compound (f) is used in an amountl of 0.5-3 m-mol per gram of the total amount of the diethoxymagnesium (a) and the calcium chloride (e).

21. A solid catalyst component according to claims 8 to 10, wherein the proportion of the titanium tetrachloride (c) to the diethoxymagnesium (a) alone or with the calcium chloride (e) at the time of the first or second contact is such that the titanium tetrachloride (c) is used in an amount of at least 1 g per gram of the diethoxymagnesium (a).

22. A solid catalyst component according to claim 21, wherein the proportion of the titanium tetrachloride (c) to the diethoxymagnesium (a) alone or with the calcium chloride (e) at the time of the first or second contact is such that the titanium tetrachloride (c) is used in an amount of at least 2 g per gram of the diethoxymagnesium (a).

23. A solid catalyst component according to claims 1 to 5 and 8 to 10, wherein the aromatic hydrocarbon (b) is used in an amount sufficient to form a suspension of the diethoxymagnesium (a) or of the diethoxymagnesium (a) and the calcium chloride (e).

24. A solid catalyst component according to claims 1 to 5 and 8 to 10, wherein the diester (d) is used in an amount of 0.05-10 m-mol per gram of the total amount of the diethoxymagnesium (a) and the calcium chloride (e).

25. A solid catalyst component according to claim 24, wherein the diester (d) is used in an amount of 0.2-5 m-mol per gram of the total amount of the diethoxymagnesium (a) and the calcium chloride (e).

13

**26.** A solid catalyst component according to claim 2 to 9, wherein the copulverization of the dielthoxymagnesium (a) and the calcium chloride (e) is effected by the aid of a vibration mill, ball mill or column grinder.

**27.** A solid catalyst component according to claim 26, wherein the copulverization of the diethoxymagnesium (a) and the calcium chloride (e) is effected within a period from 5 minutes to 100 hours.

**28.** A solid catalyst component according to claims 27, wherein the copulverization of the diethoxymagnesium (a) and the calcium chloride (e) is effected within a period from 5 minutes to 10 hours.

**29.** A solid catalyst component according to claims 1 to 28, wherein the temperatue during the first or second contact is within the range of 50-136°C.

**30.** A solid catalyst component according to claim 29, wherein the temperature during the first or second contact is within the range of 80-136°C.

**31.** A solid catalyst component according to claims 1 to 30, wherein the time for the first or second contact is within a period from 5 minutes to 100 hours.

**32.** A solid catalyst component according to claims 31, wherein the time for the first or second contact is within a period from 5 minutes to 10 hours.

**Revendications**

**1.** Un composant solide de catalyseur pour catalyseurs de polymérisation des oléfines, préparé par mise en suspension de diéthoxymagnésium (a) dans un hydrocarbure aromatique (b) qui est liquide à la température normale et mise de la suspension en un premier contact avec du tétrachlorure de titane (c) pour former un produit et mise en un second contact avec du tétrachlorure de titane (c) de telle sorte qu'un diester (d) d'un acide aromatique dicarboxylique et du chlorure de calcium (e) puissent coexister en tout stade de la mise en suspension et/ou des contacts ci-dessus, le chlorure de calcium (e) étant utilisé en une quantité de 1 à 2 grammes par gramme du diéthoxymagnésium (a).

**2.** Un composant solide de catalyseur selon la revendication 1, dans lequel un produit, obtenu par copulvérisation préalable du diéthoxymagnésium (a) et du chlorure de calcium (e), mise en suspension de la composition pulvérisée obtenue dans l'hydrocarbure aromatique (b) et mise en suspension en un premier contact avec le tétrachlorure de titane (c), est mis en un second contact avec le tétrachlorure de titane (c) de telle sorte que le diester (d) puisse coexister pendant la mise en suspension et/ou les contacts ci-dessus.

**3.** Un composant solide de catalyseur selon la revendication 1, dans lequel un produit, obtenu par mise en suspension du diéthoxymagnésium (a) et du chlorure de calcium (e) dans l'hydrocarbure aromatique (b) sous agitation et mise de la suspension en un premier contact avec le tétrachlorure de titane (c), est mis en le second contact avec le tétrachlorure de titane (c) de telle sorte que le diester (d) puisse coexister pendant la mise en suspension et/ou les contacts ci-dessus.

**4.** Un composant solide de catalyseur selon la revendication 1, dans lequel un produit, obtenu par mise en suspension du diéthoxymagnésium (a) dans l'hydrocarbure aromatique (b) et mise de la suspension en le premier contact avec le tétrachlorure de titane (c) en coexistence du chlorure de calcium (e), est mis en le second contact avec le tétrachlorure de titane (c) de telle sorte que le diester (d) puisse coexister pendant la mise en suspension et/ou les contacts ci-dessus.

**5.** Un composant solide de catalyseur selon la revendication 1, dans lequel un produit, obtenu par mise en suspension du diéthoxymagnésium (a) dans l'hydrocarbure aromatique (b) et mise de la suspension en le premier contact avec le tétrachlorure de titane (c), est mis en le second contact avec le tétrachlorure de titane (c) en coexistence avec le chlorure de calcium (e) de telle sorte que le diester (d) puisse coexister pendant la mise en suspension et/ou les contacts ci-dessus.

**6.** Un composant solide de catalyseur selon les revendications 1 à 5, dans lequel la proportion du tétrachlorure de titane (c) au diéthoxymagnésium (a) lors du premier ou du second contact est telle que le tétrachlorure de titane (c) est utilisé en une quantité d'au moins 1 gramme par gramme du diéthoxymagnésium (a).

7. Un composant solide de catalyseur selon la revendication 6, dans lequel la proportion du tétrachlorure de titane (c) au diéthoxymagnésium (a) lors du premier ou du second contact est telle que le tétrachlorure de titane (c) est utilisé en une quantité d'au moins 2 gramme par gramme du diéthoxymagnésium.

8. Un composant solide de catalyseur pour les catalyseurs de polymérisation des oléfines, préparé par traitement de contact du diéthoxymagnésium (a), du chlorure de calcium (e) et d'un composé du silicium (f) de formule générale $Si(OR)_4$ (dans laquelle R est un groupe alcoyle ou aryle) ensemble en présence d'un solvant organique (g), mise en suspension de la composition traitée dans un hydrocarbure aromatique (b) qui est liquide à la température normale et mise de la suspension en un premier contact avec du tétrachlorure de titane (c) pour former un produit et mise en un second contact avec du tétrachlorure de titane (c) de telle sorte qu'un diester (d) d'un acide aromatique dicarboxylique et du chlorure de calcium (e) puissent coexister en tout stade de la mise en suspension et/ou des contacts ci-dessus, à l'exception du traitement de contact, le chlorure de calcium (e) étant utilisé en une quantité de 1 à 2 gramme par gramme du diéthoxymagnésium (a).

9. Un composant solide de catalyseur selon la revendication 8, dans lequel un produit, obtenu par copulvérisation préalable du diéthoxymagnésium (a) et du chlorure de calcium (e), traitement de contact de la composition copulvérisée obtenue avec le composé de silicium (f) en présence du solvant organique (g), mise en suspension de la composition traitée dans l'hydrocarbure aromatique (b), puis mise de la suspension en un premier contact avec le tétrachlorure de titane (c), est mis en un second contact avec le tétrachlorure de titane (c) de telle sorte que le diester (d) puisse coexister pendant la mise en suspension et/ou les contacts ci-dessus, à l'exception du traitement de contact.

10. Un composant solide de catalyseur selon la revendication 8, dans lequel un produit, obtenu par mélange du diéthoxymagnésium (a) avec le chlorure de calcium (e) dans le solvant organique (g), traitement de contact du mélange avec le composé du silicium (f), mise en suspension de la composition traitée dans l'hydrocarbure aromatique (b) et mise de la suspension en un premier contact avec le tétrachlorure de titane (c), est mis en un second contact avec le tétrachlorure de titane (c) de telle sorte que le diester (d) puisse coexister dans la mise en suspension et/ou les contacts ci-dessus, à l'exception du traitement de contact.

11. Un composant solide de catalyseur selon les revendications 1 à 5 et 8 à 10, dans lequel l'hydrocarbure aromatique (b) est le benzène ou un alcoylbenzène.

12. Un composant solide de catalyseur selon la revendication 11, dans lequel l'hydrocarbure aromatique (b) est le toluène.

13. Un composant solide de catalyseur selon les revendications 1 à 5 et 8 à 10, dans lequel le diester (d) est un diester de l'acide phtalique ou téréphtalique.

14. Un composant solide de catalyseur selon la revendication 13, dans lequel le diester (d) est le phtalate de diméthyle, le téréphtalate de diméthyle, le phtalate de diéthyle, le téréphtalate de diéthyle, le phtalate de dipropyle, le téréphtalate de dipropyle, le phtalate de dibutyle, le téréphtalate de dibutyle, le phtalate de diisobutyle, le phtalate de diamyle, le phtalate de diisoamyle, le phtalate d'éthyle et d'isobutyle ou le phtalate d'éthyle et de propyle.

15. Un composant solide de catalyseur selon les revendications 8 à 10, dans lequel le composé du silicium (f) est un tétra(alcoxy en $C_1$-$C_4$)silane et le tétraphénoxysilane.

16. Un composant solide de catalyseur selon la revendication 15, dans lequel le composé du silicium (f) est le tétraéthoxysilane.

17. Un composant solide de catalyseur selon les revendications 8 à 10, dans lequel le solvant organique (g) est choisi parmi les hydrocarbures aromatiques et aliphatiques qui sont liquides à la température normale.

**18.** Un composant solide de catalyseur selon la revendication 17, dans lequel le solvant organique (g) est le n-heptane ou le n-hexane.

**19.** Un composant solide de catalyseur selon les revendications 8 à 10, dans lequel le composé du silicium (f) est utilisé en une quantité de 0,1 à 10 mmol par gramme de la quantité totale du diéthoxymagnésium (a) et du chlorure de calcium (e).

**20.** Un composant solide de catalyseur selon la revendication 19, dans lequel le composé du silicium (f) est utilisé en une quantité de 0,5 à 3 mmol par gramme de la quantité totale du diéthoxymagnésium (a) et du chlorure de calcium (e).

**21.** Un composant solide de catalyseur selon les revendications 8 à 10, dans lequel la proportion du tétrachlorure de titane (c) au diéthoxymagnésium (a) seul ou avec le chlorure de calcium (e), lors du premier ou du second contact, est telle que le tétrachlorure de titane (c) est utilisé en une quantité d'au moins 1 gramme par gramme du diéthoxymagnésium (a).

**22.** Un composant solide de catalyseur selon la revendication 21, dans lequel la proportion du tétrachlorure de titane (c) au diéthoxymagnésium (a) seul ou avec le chlorure de calcium (e), lors du premier ou du second contact, est telle que le tétrachlorure de titane (c) est utilisé en une quantité d'au moins 2 gramme par gramme du diéthoxymagnésium (a).

**23.** Un composant solide de catalyseur selon les revendications 1 à 5 et 8 à 10, dans lequel l'hydrocarbure aromatique (b) est utilisé en une quantité suffisante pour former une suspension du diéthoxymagnésium (a) ou du diéthoxymagnésium (a) et du chlorure de calcium (e).

**24.** Un composant solide de catalyseur selon les revendications 1 à 5 et 8 à 10, dans lequel le diester (d) est utilisé en une quantité de 0,05 à 10 mmol par gramme de la quantité totale du diéthoxymagnésium (a) et du chlorure de calcium (e).

**25.** Un composant solide de catalyseur selon la revendication 24, dans lequel le diester (d) est utilisé en une quantité de 0,2 à 5 mmol par gramme de la quantité totale du diéthoxymagnésium (a) et du chlorure de calcium (e).

**26.** Un composant solide de catalyseur selon les revendications 2 et 9, dans lequel la copulvérisation du diéthoxymagnésium (a) et du chlorure de calcium (e) est effectuée à l'aide d'un broyeur vibrant, d'un broyeur à billes ou d'un broyeur à colonne.

**27.** Un composant solide de catalyseur selon la revendication 26, dans lequel la copulvérisation du diéthoxymagnésium (a) et du chlorure de calcium (e) est effectuée en une période de 5 minutes à 100 heures.

**28.** Un composant solide de catalyseur selon la revendication 27, dans lequel la copulvérisation du diéthoxymagnésium (a) et du chlorure de calcium (e) est effectuée en une période de 5 minutes à 10 heures.

**29.** Un composant solide de catalyseur selon les revendications 1 à 28, dans lequel la température pendant le premier ou le second contact est dans la gamme de 50 à 136°C.

**30.** Un composant solide de catalyseur selon la revendication 29, dans lequel la température pendant le premier ou le second contact est dans la gamme de 80 à 136°C.

**31.** Un composant solide de catalyseur selon les revendications 1 à 30, dans lequel la durée du premier ou du second contact se situe dans une période de 5 minutes à 100 heures.

**32.** Un composant solide de catalyseur selon la revendication 31, dans lequel la durée du premier ou du

16

second contact se situe dans une période de 5 minutes à 10 heures.

**Patentansprüche**

1. Feststoffkatalysator-Komponente für Olefinpolymerisationskatalysatoren, hergestellt durch Suspendieren von Diethoxymagnesium (a) in einem aromatischen Kohlenwasserstoff (b), der bei Normaltemperatur flüssig ist, und erstes Inkontaktbringen der Suspension mit Titantetrachlorid (c) zur Bildung eines Produktes, und zweites Inkontaktbringen mit Titantetrachlorid (c) in einer Weise, daß ein Diester (d) einer aromatischen Dicarbonsäure und Calciumchlorid (e) nebeneinander in jedem Stadium des vorstehenden Suspendierens und/oder Inkontaktbringens vorliegen können, wobei das Calciumchlorid (e) in einer Menge von 1-2 g pro g des Diethoxymagnesiums (a) verwendet wird.

2. Feststoffkatalysator-Komponente nach Anspruch 1, wobei ein Produkt, das durch vorheriges Pulverisieren des Diethoxymagnesiums (a) zusammen mit dem Calciumchlorid (e), Suspendieren der erhaltenen pulverisierten Zusammensetzung in dem aromatischen Kohlenwasserstoff (b) und einem ersten Inkontaktbringen der Suspension mit dem Titantetrachlorid (c) erhalten wurde, ein zweites Mal mit dem Titantetrachlorid (c) in einer Weise in Kontakt gebracht wird, daß der Diester (d) während des vorstehenden Suspendierens und/oder Inkontaktbringens gleichzeitig vorliegen kann.

3. Feststoffkatalysator-Komponente nach Anspruch 1, wobei ein Produkt, das durch Suspendieren des Diethoxymagnesiums (a) und des Calciumchlorids (e) in dem aromatischen Kohlenwasserstoff (b) unter Rühren und durch ein erstes Inkontaktbringen der Suspension mit dem Titantetrachlorid (c) erhalten wurde, ein zweites Mal mit dem Titantetrachlorid (c) in einer Weise in Kontakt gebracht wird, daß der Diester (d) während des vorstehenden Suspendierens und/oder Inkontaktbringens gleichzeitig vorliegen kann.

4. Feststoffkatalysator-Komponente nach Anspruch 1, wobei ein Produkt, das durch Suspendieren des Diethoxymagnesiums (a) in dem aromatischen Kohlenwasserstoff (b) und einem ersten Inkontaktbringen der Suspension mit dem Titantetrachlorid (c) bei gleichzeitigem Vorhandensein von Calciumchlorid (e) erhalten wurde, ein zweites Mal mit dem Titantetrachlorid (c) in einer Weise in Kontakt gebracht wird, daß der Diester (d) während des vorstehenden Suspendierens und/oder Inkontaktbringens gleichzeitig vorliegen kann.

5. Feststoffkatalysator-Komponente nach Anspruch 1, wobei ein Produkt, das durch Suspendieren des Diethoxymagnesiums (a) in dem aromatischen Kohlenwasserstoff (b) und einem ersten Inkontaktbringen der Suspension mit dem Titantetrachlorid (c) erhalten wurde, ein zweites Mal mit dem Titantetrachlorid (c) bei gleichzeitigem Vorhandensein von Calciumchlorid (e) in einer Weise in Kontakt gebracht wird, daß der Diester (d) während des vorstehenden Suspendierens und/oder Inkontaktbringens gleichzeitig vorliegen kann.

6. Feststoffkatalysator-Komponente nach den Ansprüchen 1 bis 5, wobei das Verhältnis des Titantetrachlorids (c) zu dem Diethoxymagnesium (a) zum Zeitpunkt des ersten oder zweiten Kontakts so ist, daß das Titantetrachlorid (c) in einer Menge von mindestens 1 g pro g des Diethoxymagnesiums (a) verwendet wird.

7. Feststoffkatalysator-Komponente nach Anspruch 6, wobei das Verhältnis des Titantetrachlorids (c) zu dem Diethoxymagnesium (a) beim ersten oder zweiten Kontakt so ist, daß das Titantetrachlorid (c) in einer Menge von mindestens 2 g pro g des Diethoxymagnesiums verwendet wird.

8. Feststoffkatalysator-Komponente für Olefinpolymerisationskatalysatoren, hergestellt, indem man Diethoxymagnesium (a), Calciumchlorid (e) und eine Siliciumverbindung (f) der allgemeinen Formel $Si(OR)_4$ (in der R ein Alkyl- oder Arylrest ist) zusammen einer Kontaktbehandlung in der Gegenwart eines organischen Lösungsmittels (g) unterwirft, die behandelte Zusammensetzung in einem aromatischen Kohlenwasserstoff (b), der bei Normaltemperatur flüssig ist, suspendiert und die Suspension in einen ersten Kontakt mit Titantetrachlorid (c) bringt, so daß ein Produkt gebildet wird, und es in einer Weise in einen zweiten Kontakt mit Titantetrachlorid (c) bringt, daß ein Diester (d) einer aromatischen Dicarbonsäure und Calciumchlorid (e) in jedem Stadium des vorstehenden Suspendierens und/oder Inkontaktbringens nebeneinander vorliegen können, mit der Ausnahme der Kontaktbehandlung, wobei das Calciumchlorid (e) in einer Menge von 1 bis 2 g pro g des Diethoxymagnesiums (a) verwendet wird.

9. Feststoffkatalysator-Komponente nach Anspruch 8, wobei ein Produkt, das erhalten wurde, indem man vorher das Diethoxymagnesium (a) zusammen mit dem Calciumchlorid (e) pulverisierte, die erhaltene pulverisierte Zusammensetzung einer Kontaktbehandlung mit der Siliciumverbindung (f) in Gegenwart des organischen Lösungsmittels (g) unterwarf, die behandelte Zusammensetzung in dem aromatischen Kohlenwasserstoff (b) suspendierte und anschließend die Suspension ein erstes Mal mit dem Titantetrachlorid (c) in Kontakt brachte, in einer Weise in einen zweiten Kontakt mit dem Titantetrachlorid (c) gebracht wird, daß der Diester (d) während des vorstehenden Suspendierens und/oder Inkontaktbringens mit Ausnahme der Kontaktbehandlung gleichzeitig vorliegen kann.

10. Feststoffkatalysator-Komponente nach Anspruch 8, wobei ein Produkt, das erhalten wurde, indem man das Diethoxymagnesium (a) mit dem Calciumchlorid (e) in dem organischen Lösungsmittel (g) vermischte, das Gemisch einer Kontaktbehandlung mit der Siliciumverbindung (f) unterwarf, die behandelte Zusammensetzung in dem aromatischen Kohlenwasserstoff (b) suspendierte und die Suspension in einen ersten Kontakt mit dem Titantetrachlorid (c) brachte, in einer Weise in einen zweiten Kontakt mit dem Titantetrachlorid (c) gebracht wird, daß der Diester (d) während des vorstehenden Suspendierens und/oder Inkontaktbringens mit Ausnahme der Kontaktbehandlung gleichzeitig vorliegen kann.

11. Feststoffkatalysator-Komponente nach den Ansprüchen 1 bis 5 und 8 bis 10, wobei der aromatische Kohlenwasserstoff (b) Benzol oder ein Alkylbenzol ist.

12. Feststoffkatalysator-Komponente nach Anspruch 11, wobei der aromatische Kohlenwasserstoff (b) Toluol ist.

13. Feststoffkatalysator-Komponente nach den Ansprüchen 1 bis 5 und 8 bis 10, wobei der Diester (d) ein Diester der Phthal- oder Terephthalsäure ist.

14. Feststoffkatalysator-Komponente nach Anspruch 13, wobei der Diester (d) Phthalsäuredimethylester, Terephthalsäuredimethylester, Phthalsäurediethylester, Terephthalsäurediethylester, Phthalsäuredipropylester, Terephthalsäuredipropylester, Phthalsäuredibutylester, Terephthalsäuredibutylester, Phthalsäurediisobutylester, Phthalsäurediamylester, Phthalsäurediisoamylester, Phthalsäureethylisobutylester oder Phthalsäureethylpropylester ist.

15. Feststoffkatalysator-Komponente nach den Ansprüchen 8 bis 10, wobei die Siliciumverbindung (f) Tetra($C_1$-$C_4$-alkoxy)silan und Tetraphenoxysilan ist.

16. Feststoffkatalysator-Komponente nach Anspruch 15, wobei die Siliciumverbindung (f) Tetraethoxysilan ist.

17. Feststoffkatalysator-Komponente nach den Ansprüchen 8 bis 10, wobei das organische Lösungsmittel (g) ausgewählt ist aus aromatischen und aliphatischen Kohlenwasserstoffen, die bei Normaltemperatur flüssig sind.

18. Feststoffkatalysator-Komponente nach Anspruch 17, wobei das organische Lösungsmittel (g) n-Heptan oder n-Hexan ist.

19. Feststoffkatalysator-Komponente nach den Ansprüchen 8 bis 10, wobei die Siliciumverbindung (f) in einer Menge von 0,1 bis 10 mmol pro g der Gesamtmenge des Diethoxymagnesiums (a) und des Calciumchlorids (e) verwendet wird.

20. Feststoffkatalysator-Komponente nach Anspruch 19, wobei die Siliciumverbindung (f) in einer Menge von 0,5 bis 3 mmol pro g der Gesamtmenge des Diethoxymagnesiums (a) und des Calciumchlorids (e) verwendet wird.

21. Feststoffkatalysator-Komponente nach den Ansprüchen 8 bis 10, wobei das Verhältnis des Titantetrachlorids (c) zu dem Diethoxymagnesium (a) alleine oder zusammen mit dem Calciumchlorid (e) zum

18

Zeitpunkt des ersten oder zweiten Kontakts so ist, daß das Titantetrachlorid (c) in einer Menge von mindestens 1 g pro g des Diethoxymagnesiums (a) verwendet wird.

22. Feststoffkatalysator-Komponente nach Anspruch 21, wobei das Verhältnis des Titantetrachlorids (c) zu dem Diethoxymagnesium (a) alleine oder zusammen mit dem Calciumchlorid (e) zum Zeitpunkt des ersten oder zweiten Kontakts so ist, daß das Titantetrachlorid (c) in einer Menge von mindestens 2 g pro g des Diethoxymagnesiums (a) verwendet wird.

23. Feststoffkatalysator-Komponente nach den Ansprüchen 1 bis 5 und 8 bis 10, wobei der aromatische Kohlenwasserstoff (b) in einer Menge verwendet wird, die ausreicht, um eine Suspension des Diethoxymagnesiums (a) oder des Diethoxymagnesiums (a) und des Calciumchlorids (e) zu bilden.

24. Feststoffkatalysator-Komponente nach den Ansprüchen 1 bis 5 und 8 bis 10, wobei der Diester (d) in einer Menge von 0,05 bis 10 mmol pro g der Gesamtmenge des Diethoxymagnesiums (a) und des Calciumchlorids (e) verwendet wird.

25. Feststoffkatalysator-Komponente nach Anspruch 24, wobei der Diester (d) in einer Menge von 0,2 bis 5 mmol pro g der Gesamtmenge des Diethoxymagnesiums (a) und des Calciumchlorids (e) verwendet wird.

26. Feststoffkatalysator-Komponente nach Anspruch 2 und 9, wobei das Pulverisieren des Diethoxymagnesiums (a) zusammen mit dem Calciumchlorid (e) mit Hilfe einer Schwingmühle, Kugelmühle oder eines Säulenmahlwerks durchgeführt wird.

27. Feststoffkatalysator-Komponente nach Anspruch 26, wobei das Pulverisieren des Diethoxymagnesiums (a) zusammen mit dem Calciumchlorid (e) in einem Zeitraum von 5 min bis 100 h durchgeführt wird.

28. Feststoffkatalysator-Komponente nach Anspruch 27, wobei das Pulverisieren des Diethoxymagnesiums (a) zusammen mit dem Calciumchlorid (e) in einem Zeitraum von 5 min bis 10 h durchgeführt wird.

29. Feststoffkatalysator-Komponente nach den Ansprüchen 1 bis 28, wobei die Temperatur während des ersten oder zweiten Kontakts im Bereich von 50 bis 136°C liegt.

30. Feststoffkatalysator-Komponente nach Anspruch 29, wobei die Temperatur während des ersten oder zweiten Kontakts im Bereich von 80 bis 136°C liegt.

31. Feststoffkatalysator-Komponente nach den Ansprüchen 1 bis 30, wobei der Zeitraum für den ersten oder zweiten Kontakt in einem Bereich von 5 min bis 100 h liegt.

32. Feststoffkatalysator-Komponente nach Anspruch 31, wobei der Zeitraum für den ersten oder zweiten Kontakt in einem Bereich von 5 min bis 10 h liegt.